# EUROPEAN PATENT SPECIFICATION

(11) **EP 1 826 123 B1**
(45) Date of publication and mention of the grant of the patent: **09.09.2009**
(21) Application number: 07102851.8
(22) Date of filing: 22.02.2007
(51) Int. Cl.: B65B 51/16, B65B 9/06

(54) **Device for longitudinally welding two overlapped edges of a film**
Vorrichtung zum Längsschweissen zweier überlappender Ränder eines Filmes
Dispositif de soudage longitudinal de deux bords chevauchés d'un film

(30) Priority: 24.02.2006 IT BO20060135
(43) Date of publication of application: 29.08.2007
(73) Proprietor: S.T.S. S.r.l., 40011 Anzola Emilia (Bologna) (IT)
(72) Inventor: Grilli, Gian Luca, 41058 Vignola (Modena) (IT); Montali, Gian Luigi, 41058 Vignola (Modena) (IT)
(74) Representative: Dall'Olio, Giancarlo

(56) References cited:
- WO-A-93/01091
- GB-A- 2 260 959
- US-A- 3 958 390
- US-A- 4 715 166

## Description

The invention relates to automatic machines, so called "wrapping machines", aimed at packaging articles within a film of plastic material, for example transparent.

The above mentioned articles can be books, magazines, advertising matters, packets of sheets, or others of different kind, for example paper plates or cups.

According to a known technique, these machines include a conveying line, on which articles to be packaged are placed, regularly spaced apart, and a spool, from which the above mentioned film is unwound and placed, in spread configuration, on a slide plane situated downstream of the conveying line.

The articles leaving the conveying line, in suitable transversal alignment, e.g. centered, are transferred onto the strip of the spread film, disposed parallel to the conveying line and moved with the same speed; suitably shaped, stationary folding members fold the strip of film to form a longitudinal sleeve, which wraps around the articles.

In the above case, in which the articles are centered transversely on the strip of film, the lateral edges of the strip of film are overlapped, centrally with respect to the articles and thereabove, due to the sleeve-like wrapping.

At this point, the two overlapped edges are joined longitudinally, so as to stabilize the tubular configuration; afterwards, two transversal abreast welding lines are made in the portion of the sleeve between one article and another, and a cutting necessary for separating one package from another is made between the two welding lines.

The continuous longitudinal joining of the edges is usually obtained by heat-welding, which is generally performed on a very thin strip thereof.

As it is well known to those expert in the field, it is very difficult to adjust the temperature of the welding means in optimal way, to ensure the material correct melting and at the same time, to avoid its burning.

Obviously, it is necessary to take into consideration different features of the material, according to whether polyethylene, polypropylene or other material is used, as well as the thickness thereof.

In particular, it is to be pointed out that the very small thickness reduces considerably the allowed range of the temperature value.

The welding is affected by two further parameters, the first of which is given by the force with which the welding means press the edges, and the second by the film forward movement speed, which in some machines for publishing use reaches very high values.

The edges are heat welded by known welding devices.

A first type of known device includes a welding member, formed by an arc, suitably heated, set to touch the edges to be welded and made oscillate on a vertical plane, parallel to the forward movement direction of the longitudinal sleeve, so as to perform a mechanical action, which facilitates the edges joining and, at the same time, allows to change dynamically the arc portion touching the material, so as to make the welding temperature more uniform.

This solution is used in the packaging of books, periodicals and the like, or of articles having parallelepiped shape, which can offer a flat and regular lower support for edges to be welded.

A second known device, used in an analogous way, includes a welding member, which is formed by a vertical plate, suitably heated, situated longitudinally to the edges and tapered in the edges touching area.

The above mentioned devices do not ensure uniform welding, since there is no support for the welding member in the portion of the sleeve between one article and another, and consequently the pressure of the welding member on the edges diminishes.

These drawbacks become more evident when the shape of article is irregular or does not supply the support in the edges area.

In order to operate in the just mentioned conditions, the above described devices are often accompanied by an edge support element, formed by a frame cantilevered to an arm and situated below the edges, in the welding member operation area, so as to stretch the portion of the edges, directly surrounding the welding area and to contrast its lowering.

However, even with such a contrivance, the drawbacks cannot be wholly eliminated, in particular when the film material is very thin and/or very yielding; moreover, the frame, and its support arm, can sometimes hinder the regular film sliding.

In order to avoid drawbacks, which cannot be overcome otherwise, with some kinds of material and with very small thickness, a so called crest welding is used, in which the edges are folded upwards and welded horizontally by opposite welding members, forming a kind of pliers.

The last solution is not acceptable from the purely aesthetic point of view, because the edges joining area remains anyway very noticeable, therefore it is not suitable for packages having particular requirements from this aspect.

The use of some materials, one of which recent, called polyulefine, and of very small thickness, does not derive only from economic considerations, being anyway important, but also from the operation needs, which arise after the welding and after the package separation, in particular in case of packages of heat-shrinking material, which must be subjected to a heating action.

In some cases, the longitudinal edge welding is waived and replaced with an edge ionization process, which causes the edge joining due to electrostatic effect.

However, the obtained cohesion is rather light, and is anyway not sufficient to ensure the integrity of the obtained package after its handling, therefore it cannot be proposed for all the uses.

Thus, the object of the present invention is to propose a device for longitudinal welding of two overlapped edges of a film, which can operate on all kinds of available plastic materials, even with very small thickness.

Another object of the invention is to propose a device shaped in such a way, as to assure a very stable temperature of the welding member, so as to obtain a homogenous welding.

A further object of the invention is to propose a device, which ensures a very uniform welding in the portions of the longitudinal sleeve, formed by the film, containing the article, as well as in its portions between the articles, where the sleeve is empty.

A still further object of the invention is to obtain a device, whose functionality does not depend on the shape of the article wrapped with the film, even when the latter is irregular or does not give the support in the area of overlapped edges.

A yet further object of the present invention is to propose a device, which does not hinder the film regular sliding and which produces an efficient and uniform welding even at high operation speeds.

The characteristic features of the invention will become clear in the following description of a preferred embodiment of the proposed device, in accordance with the contents of claims, and with reference to the enclosed figures, in which:
- Figure 1 is a perspective view of the device;
- Figure 2 is a top view thereof, with some parts removed to better point out others;
- Figure 3 is an enlarged section view taken along the plane III-III of Figure 2;
- Figure 4 is an enlarged section view taken along the plane IV-IV of Figure 2;
- Figure 5 is an enlarged section view taken along the plane V-V of Figure 2.

Having regards to the above Figures, the reference numeral 100 indicates the proposed welding device as a whole.

The device 100 is associated to a wrapping machine of known type, described in the introductory note and not shown, aimed at packaging articles 1 with a film 2 of plastic material, which can be e.g. polyethylene, polypropylene, polyulefine and the like.

The film 2 thickness can vary from the minimum values, suitable for obtaining heat-shrinkable packages, to bigger values suitable for obtaining strong, soft packages.

As it has been already said, the film 2 is unwound from a spool and placed, in a spread configuration, on a slide plane situated downstream of a conveying line, which feeds the articles 1 onto the spread film 2, which is next folded, so as to form a longitudinal sleeve 2T, wrapping the articles 1, and made move forward continuously, at the same speed as the articles.

In the shown example, the articles 1 are centered crosswise on the spread film 2, with the lateral edges 21, 22 of the latter brought to be overlapped in a central position with respect to the articles 1, above them, due to the film wrapping.

Otherwise, it is possible that the overlapped edges 21, 22 are situated on one side or the other of the longitudinal sleeve 2T, for example in case of articles 1 having asymmetrical shape, without jeopardizing the operation of the device 100 described below.

The device 100 includes a stationary arm 11, integral with the machine frame and extended crosswise to the longitudinal sleeve 2T, so as to be interposed, in a nearly horizontal arrangement, between the two overlapped edges 21, 22, on the side, where the lower edge 21 is placed below the upper edge 22.

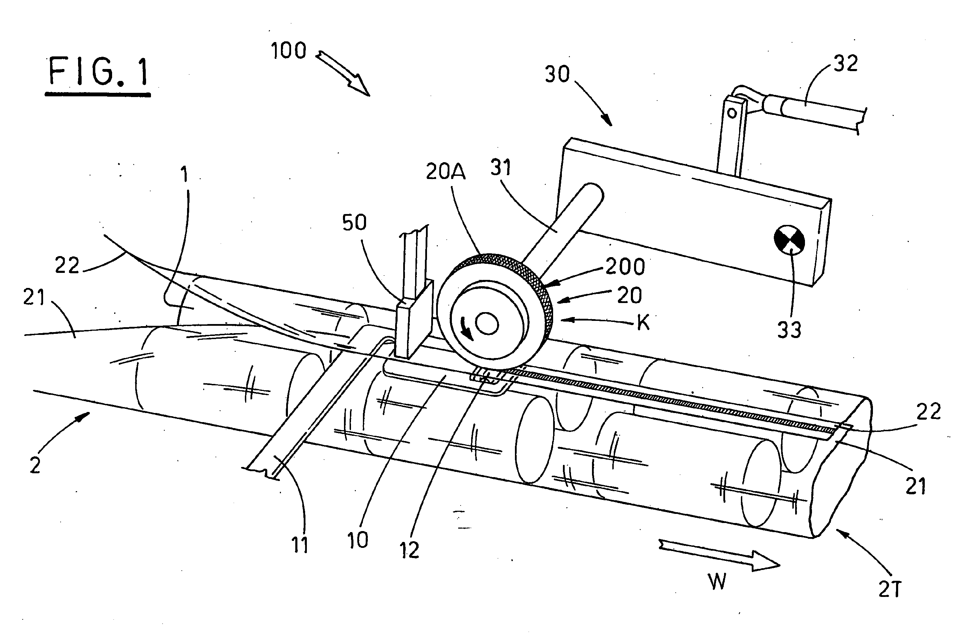

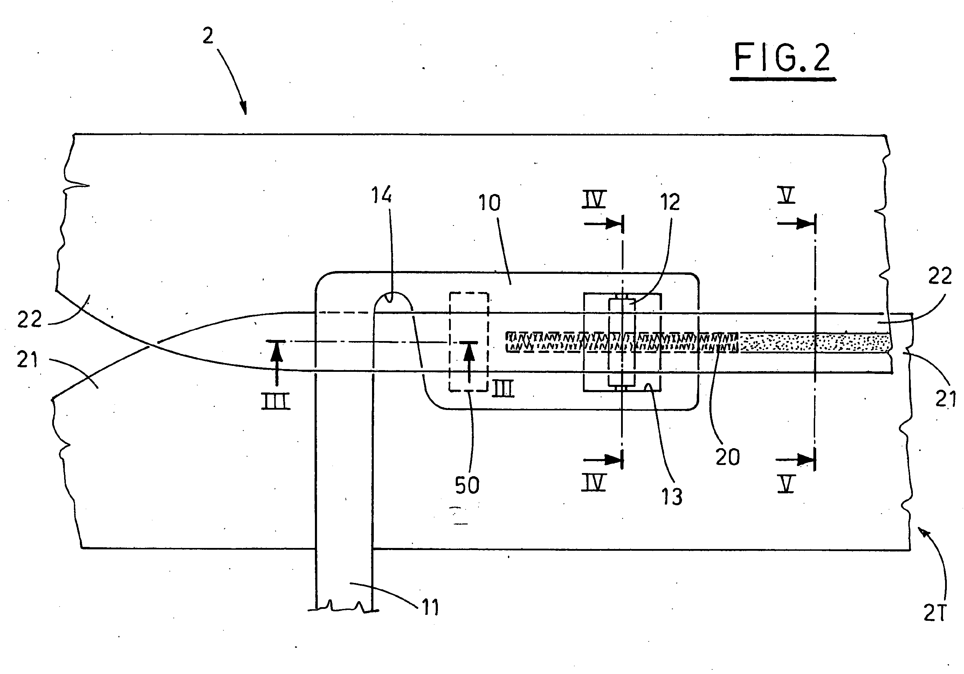

A horizontal chute 10 is cantilevered to the stationary arm 11, at one of its ends, so as to be placed below the overlapped edges 21, 22 and extended parallel to the latter, in the same forward movement direction W of the longitudinal sleeve 2T (Figures 1 and 2).

The chute 10 and the end of the stationary arm 11 are placed at such a level, as not to interfere with the passage of the articles 1, situated below.

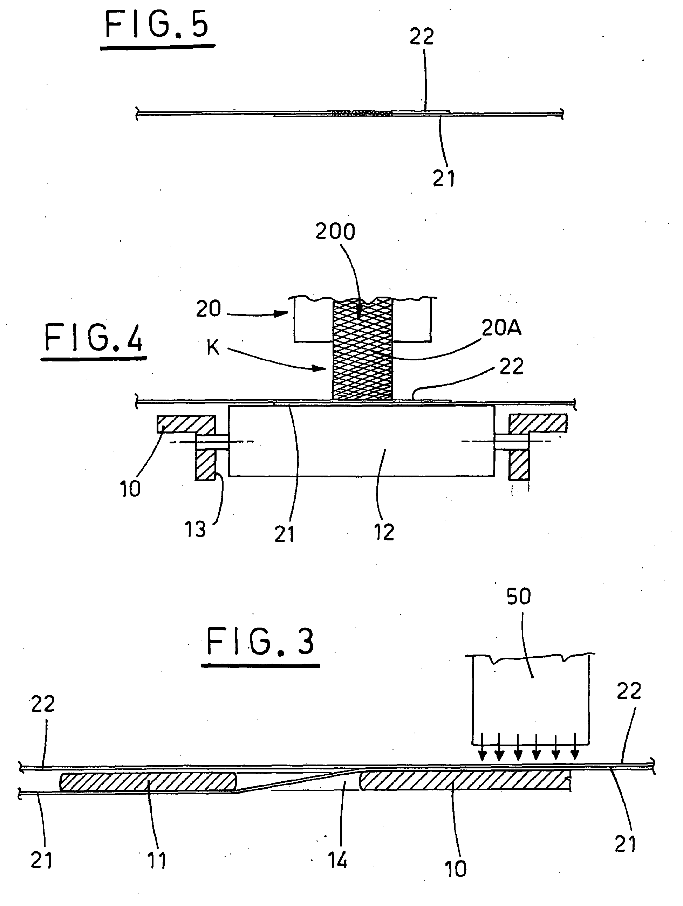

An indentation 14, suitably situated in the connection area between the stationary arm 11 and the chute 10, allows the lower edge 21, situated below the stationary arm 11, to pass above the chute 10 (Figures 2 and 3).

All the surfaces of the arm 11 and of the chute 10 touched by the passage of the edges 21, 22, are accurately polished and have rounded edges, so as to offer the minimum friction and avoid damages to the film 2.

According to a preferred embodiment, the width of the chute 10 is bigger than the overlapping area of the two edges 21, 22.

The chute 10 supports, in a region corresponding to a slot 13, an idle roller 12, whose axis is horizontal and transversal with respect to the forward movement direction of the longitudinal sleeve 2T.

In the shown example, the upper limit of the idle roller 12 is higher with respect to the plane defined by the chute 10, but it can be set at level with the latter and slightly lower, according to the results of tests to be done with various materials and thickness.

A welding disc 20, situated above the overlapped edges 21, 22, in a position corresponding to the roller 12, has the axis parallel to the one of the roller 12 and is situated at the same vertical plane.

The welding disc 20 is carried idle at the end of a shaft 31, associated to a basculating structure 30, hinged in a fulcrum 33 to the machine frame.

Heating means, for example heating electric elements, associated to the welding disc 20 in a known manner, not shown in detail, are aimed at bringing the latter to, and at maintaining it at, the selected temperatures, which vary according to the material of the film 2 and/or its thickness.

The set temperatures must be as constant and uniform as possible, in particular along the circumference surface 20A of the welding disc 20, aimed at touching the overlapped edges 21, 22, as it will be better specified in the following.

According to a preferred embodiment, the circumference surface 20A features a knurling 200 or is treated with an analogous treatment aimed at making the surface very rough, and consequently giving it a suitable non-slip feature ("grip" in the jargon).

An ionizer 50 is situated upstream of the welding disc 20 and the roller 12, above the overlapped edges 21, 22, in the initial section of the chute 10, where the lower edge 21 has passed the indentation 14 and is placed close to the upper edge 22, above the chute 10 (Figures 1 and 3).

The ionizer 50 causes spreading out of the edges 21, 22 and joins them due to the electrostatic effect, preparing them at best for the subsequent welding.

The basculating structure 30 is connected to actuating means 32, which raise and lower it, thus defining respectively a rest raised position of the welding disc 20, in which it does not touch the overlapped edges 21, 22, and an operation lowered position K thereof, in which the overlapped edges 21, 22 are gripped and tightened between the disc 20 and the roller 12 (Figures 1 and 4).

The combined action of pressing and temperature, performed by the disc 20 and roller 12 on the edges 21, 22, causes the heat-welding of the latter along a length corresponding to the length of the circumference surface 20A.

The presence of the knurling 200 facilitates permeation of the two edges 21, 22 material during the heat-welding, thus improving their cohesion and, at the same time, supplies a "grip" adequate for determining, due to the longitudinal sleeve 2T forward movement, a corresponding rotation of the disc 20 and the roller 12, in respective opposite directions.

According to an embodiment, not shown, the welding disc 20 is operated to rotate by suitable motor means, synchronously with the longitudinal sleeve 2T forward movement.

It is to be particularly pointed out that in the just described device 100 the heat-welding is obtained by the disc 20, which rolls on the edges 21, 22 without scraping, thus creating rolling friction, and not the sliding friction, which is created by the welding means of the known devices mentioned in the introductory note.

A similar rolling friction is created between the idle roller 12 and the edges 21, 22 while the sliding friction between the latter and the chute 10 is almost absent, because of the irrelevant weight of the edges and the accurate manufacturing of the chute 10.

These characteristics allow to obtain perfect welding with film of any material and even having very small thickness.

The presence of the ionizer 50 becomes particularly efficient for this purpose, as it sets the edges for the best conditions for the welding.

The rotating welding disc, either idle or motorized, is advantageous not only by virtue of the sliding friction it creates with the edges, but also because it maintains stable the temperature of the disc, since the portion giving heat to the film to be welded is always dynamically different.

The uniformity of the obtained welding is ensured along its whole length, either where the article is present, or where it is not, and independently from the support given by the article to the overlapped edges, due to the presence of the chute 10 with the roller 12.

Finally, due to its conformation, the proposed device allows optimal welding, even at the maximum operation speeds of the above mentioned wrapper machines.

The advantages that can be obtained by the presented device are extremely interesting, taking into consideration the limited production costs allowed by its constructive simplicity.

## Claims

1. Device for longitudinally welding two overlapped edges of a film, with said device being joined to a wrapping machine for packing articles (1) within a film (2) of plastic material, unwound from a spool and placed in spread configuration on a slide plane, which is situated downstream of a conveying line, for feeding said articles (1) onto said spread film (2), the latter being subsequently folded to form a longitudinal sleeve (2T), which wraps around the articles (1) and is moved forward with the same speed (W) as said articles (1), with said overlapped edges (21, 22) of the film (2) being placed above the articles (1), **characterized in that** it includes:
a horizontal chute (10), placed below said edges (21, 22) for supporting them at such a level as not to interfere with the passage of the articles (1) situated below, with said chute (10) being cantilevered to the end of a stationary arm (11) protruding crosswise so as to be interposed between said edges (21, 22);
an idle roller (12), supported in a position corresponding to a slot (13) made in said chute (10), with the horizontal axis being transversal to the forward movement direction of the longitudinal sleeve (2T);
a welding disc (20), placed above said edges (21, 22) with the axis parallel to the axis of the roller (12), on the same vertical plane;
heating means, joined to said welding disc (20) and maintaining the latter at a selected temperature, constant and uniform along the circumference surface (20A);
a basculating structure (30) for supporting said welding disc (20) by a shaft (31), and connected to actuating means (32) for defining a rest raised position of the disc (20) and a lowered operation position (K) thereof, in which said overlapped edges (21, 22) are interposed between the disc (20) and the roller (12) and subjected to a combined action of pressing and temperature, performed by said disc (20) and said roller (12), such as to cause the edges heat-welding, with said disc (20) and roller (12) being driven into rotation, in respective opposite direction, synchronously with the forward movement of said longitudinal sleeve (2T).

2. Device, according to claim 1, **characterized in that** said welding disc (20) is idle on its axis and is driven into rotation due to the forward movement of said longitudinal sleeve (2T).

3. Device, according to claim 1, **characterized in that** said welding disc (20) is operated to rotate by associated motor means, synchronously with the forward movement of said longitudinal sleeve (2T).

4. Device, according to claim 1, or 2, or 3, **characterized in that** said circumference surface (20A) of the welding disc (20) is very rough, which gives it a non-slip action.

5. Device, according to claim 1, **characterized in that** it includes an ionizer (50), placed above said overlapped edges (21, 22), directly upstream of said welding disc (20) and roller (12), with said ionizer (50) spreading out and joining said edges (21, 22) due to electrostatic effect.

6. Device, according to claim 1, **characterized in that** an indentation (14) is situated between said stationary arm (11) and said chute (10), to allow the lower edge (21) of the two overlapped edges, to pass from a position below said stationary arm (11), above said chute (10), to be placed close to the upper edge (22).

7. Device, according to claim 1, **characterized in that** the width of said chute (10) is bigger than the width of the overlapping area of the two edges (21, 22).

8. Device, according to claim 1, **characterized in that** the upper limit of said idle roller (12) is higher with respect to the plane defined by said chute (10).

9. Device, according to claim 1, **characterized in that** the upper limit of said idle roller (12) is set at level with the plane defined by said chute (10).

10. Device, according to claim 1, **characterized in that** the upper limit of said idle roller (12) is lower than the plane defined by said chute (10).

## Patentansprüche

1. Vorrichtung zum Längsverschweißen von zwei übereinander gelegten Rändern einer Folie, wobei die Vorrichtung verbunden ist mit einer Einwickelmaschine zum Verpacken von Gegenständen (1) in eine Kunststofffolie (2), die von einer Spule abgewickelt und auf einer Gleitebene ausgebreitet wird, die einem Förderband zur Zuführung der Gegenstände (1) auf die ausgebreitete Folie (2) nachgeschaltet ist, wobei die Folie anschließend gefaltet wird und eine Längshülse (2T) bildet, die sich um die Gegenstände (1) wickelt und mit derselben Geschwindigkeit (W) wie diese Gegenstände (1) vorwärts bewegt wird, wobei die übereinander gelegten Ränder (21, 22) der Folie (2) über den Gegenständen (1) platziert werden, **gekennzeichnet durch:**
eine horizontale Rampe (10), die zur Unterstützung der Ränder (21, 22) auf einer derartigen Höhe unter den Rändern (21, 22) angeordnet ist, dass der Durchtritt der darunter befindlichen Gegenstände (1) nicht beeinträchtigt wird, wobei diese Rampe (10) einseitig am Ende eines quer hervorragenden ortsfesten Arms (11) angebracht ist, so dass sie zwischen den Rändern (21, 22) verläuft;
eine Leerlaufrolle (12), die in einer Stellung entsprechend einem in der Rampe (10) vorgesehenen Schlitz (13) gelagert ist, wobei ihre horizontale Achse quer zur Vorwärtsbewegungsrichtung der Längshülse (2T) verläuft;
eine über den Rändern (21, 22) angeordnete Schweißscheibe (20), deren Achse parallel zur Achse der Rolle (12) ist und die in derselben vertikalen Ebene liegt;
mit der Schweißscheibe (20) verbundene Heizmittel, die diese konstant und gleichmäßig an deren Umfangsfläche (20A) entlang auf einer ausgewählten Temperatur halten;
eine schwingende Anordnung (30), an der die Schweißscheibe (20) über eine Welle (31) gelagert ist und die mit einer Betätigungsvorrichtung (32) zur Definition einer angehobenen Ruhestellung der Scheibe (20) und einer abgesenkten Betriebsstellung (K) dieser verbunden ist, bei der die übereinander gelegten Ränder (21, 22) zwischen die Scheibe (20) und die Rolle (12) geschoben werden und einer kombinierten Wirkung von Anpressdruck und Temperatur ausgesetzt werden, die von der Scheibe (20) bzw. der Rolle (12) ausgeübt werden, um die Ränder miteinander zu verschweißen, wobei die Scheibe (20) und die Rolle (12) synchron zur Vorwärtsbewegung der Längshülse (2T) in jeweils entgegengesetzte Richtung in Drehung versetzt werden.

2. Vorrichtung nach Anspruch 1, **dadurch gekennzeichnet, dass** die Schweißscheibe (20) auf ihrer Achse leer läuft und von der Vorwärtsbewegung der Längshülse (2T) in Drehung versetzt wird.

3. Vorrichtung nach Anspruch 1, **dadurch gekennzeichnet, dass** die Schweißscheibe (20) durch zugehörige Motormittel synchron zur Vorwärtsbewegung der Längshülse (2T) in Drehung versetzt wird.

4. Vorrichtung nach Anspruch 1, 2 oder 3, **dadurch gekennzeichnet, dass** die Umfangsoberfläche (20A) der Schweißscheibe (20) sehr rau ist, was ihr eine rutschfeste Wirkung verleiht.

5. Vorrichtung nach Anspruch 1, **dadurch gekennzeichnet, dass** sie einen lonisator (50) aufweist, der über den übereinander gelegten Rändern (21, 22) unmittelbar vor der Schweißscheibe (20) und Rolle (12) angeordnet ist, wobei der lonisator (50) durch elektrostatische Wirkung die Ränder (21, 22) ausbreitet und miteinander verbindet.

6. Vorrichtung nach Anspruch 1, **dadurch gekennzeichnet, dass** zwischen dem ortsfesten Arm (11) und der Rampe (10) eine Vertiefung (14) vorgesehen ist, die dazu beiträgt, dass der untere Rand (21) der zwei übereinander gelegten Ränder von einer Position unter dem ortsfesten Arm (11), über der Rampe (10), an eine Position nahe dem oberen Rand (22) verlaufen kann.

7. Vorrichtung nach Anspruch 1, **dadurch gekennzeichnet, dass** die Rampe (10) in ihrer Breite größer ist als die Breite des überlappenden Bereichs der zwei Ränder (21, 22).

8. Vorrichtung nach Anspruch 1, **dadurch gekennzeichnet, dass** die Obergrenze der Leerlaufrolle (12) höher liegt als die von der Rampe (10) definierte Ebene.

9. Vorrichtung nach Anspruch 1, **dadurch gekennzeichnet, dass** die Obergrenze der Leerlaufrolle (12) auf das gleiche Niveau wie die von der Rampe (10) definierte Ebene eingestellt ist.

10. Vorrichtung nach Anspruch 1, **dadurch gekennzeichnet, dass** die Obergrenze der Leerlaufrolle (12) tiefer als die von der Rampe (10) definierte Ebene liegt.

## Revendications

1. Dispositif pour souder longitudinalement deux bords superposés d'un film, ledit dispositif étant joint à une machine à envelopper pour emballer des articles (1) dans un film (2) de matière plastique, déroulé d'une bobine et placé dans une configuration étalée dans un plan de coulissement, qui est situé en aval d'une ligne de transport, pour distribuer lesdits articles (1) sur ledit film étalé (2), ce dernier étant par la suite plié pour former une gaine longitudinale (2T), qui s'enroule autour des articles (1) et qui est déplacée en avant à la même vitesse (W) que lesdits articles (1), lesdits bords (21, 22) superposés du film (2) étant placés au-dessus des articles (1), **caractérisé en ce qu'**il comprend :
une glissière (10) horizontale, placée au-dessous desdits bords (21, 22) pour les supporter à un niveau tel qu'ils n'interfèrent pas avec le passage des articles (1) situés au-dessous, ladite glissière (10) étant en porte-à-faux à l'extrémité d'un bras fixe (11) faisant saillie transversalement de manière à être interposé entre lesdits bords (21, 22) ;
un rouleau libre (12), supporté à une position correspondant à une fente (13) pratiquée dans ladite glissière (10), l'axe horizontal étant transversal à la direction de déplacement en avant de la gaine longitudinale (2T) ;
un disque de soudage (20), placé au-dessus desdits bords (21, 22) avec l'axe parallèle à l'axe du rouleau (12), dans le même plan vertical ;
des moyens de chauffage, joints audit disque de soudage (20) et maintenant ce dernier à une température sélectionnée, constante et uniforme le long de la surface circonférentielle (20A) ;
une structure de basculement (30) pour supporter ledit disque de soudage (20) par un arbre (31), et reliée à des moyens d'actionnement (32) pour définir une position de repos élevée du disque (20) et une position d'actionnement abaissée (K) de celui-ci, dans lequel lesdits bords (21, 22) superposés sont interposés entre le disque (20) et le rouleau (12) et soumis à une action combinée de pression et de température, effectuée par ledit disque (20) et ledit rouleau (12), de manière à provoquer le soudage thermique des bords, ledit disque (20) et le rouleau (12) étant entraînés en rotation, dans des directions opposées respectives, en synchronisation avec le déplacement en avant de ladite gaine longitudinale (2T).

2. Dispositif, selon la revendication 1, **caractérisé en ce que** ledit disque de soudage (20) est libre sur son axe et est entraîné en rotation du fait du déplacement en avant de ladite gaine longitudinale (2T).

3. Dispositif selon la revendication 1, **caractérisé en ce que** ledit disque de soudage (20) est actionné pour être entraîné en rotation par des moyens formant moteur associés, en synchronisation avec le déplacement en avant de ladite gaine longitudinale (2T).

4. Dispositif selon la revendication 1, ou 2, ou 3, **caractérisé en ce que** ladite surface circonférentielle (20A) du disque de soudage (20) est très rugueuse, ce qui lui donne une action antiglissement.

5. Dispositif selon la revendication 1, **caractérisé en ce qu'**il comprend un dispositif d'ionisation (50), placé au-dessus desdits bords (21, 22) superposés, directement en amont dudit disque de soudage (20) et du rouleau (12), ledit dispositif d'ionisation (50) étalant et joignant lesdits bords (21, 22) par un effet électrostatique.

6. Dispositif selon la revendication 1, **caractérisé en ce qu'**une indentation (14) est située entre ledit bras fixe (11) et ladite glissière (10), pour permettre au bord inférieur (21) des deux bords superposés de passer d'une position au-dessous dudit bras fixe (11), au-dessus de ladite glissière (10), pour être placé à proximité du bord supérieur (22).

7. Dispositif selon la revendication 1, **caractérisé en ce que** la largeur de ladite glissière (10) est plus grande que la largeur de la zone de superposition des deux bords (21, 22).

8. Dispositif selon la revendication 1, **caractérisé en ce que** la limite supérieure dudit rouleau libre (12) est plus élevée que le plan défini par ladite glissière (10).

9. Dispositif selon la revendication 1, **caractérisé en ce que** la limite supérieure dudit rouleau libre (12) est fixée au même niveau que le plan défini par ladite glissière (10).

10. Dispositif selon la revendication 1, **caractérisé en ce que** la limite supérieure dudit rouleau libre (12) est au-dessous du plan défini par ladite glissière (10).
